Europäisches Patentamt

European Patent Office

Office européen des brevets

(19)

(11) Veröffentlichungsnummer: **0 187 338 B1**

(12) **EUROPÄISCHE PATENTSCHRIFT**

(45) Veröffentlichungstag der Patentschrift:
06.09.89

(21) Anmeldenummer: 85116241.2

(22) Anmeldetag: 19.12.85

(51) Int. Cl.⁴: **C 04 B 35/66, C 04 B 35/02, B 22 D 41/02, F 27 D 1/16**

(54) Feuerfeste isolierende Spritzmasse.

(30) Priorität: 28.12.84 AT 4129/84

(43) Veröffentlichungstag der Anmeldung:
16.07.86 Patentblatt 86/29

(45) Bekanntmachung des Hinweises auf die Patenterteilung:
06.09.89 Patentblatt 89/36

(84) Benannte Vertragsstaaten:
AT BE DE FR GB IT SE

(56) Entgegenhaltungen:
EP-A- 0 047 728
DE-A- 1 646 945
DE-A- 2 800 988

CHEMICAL ABSTRACTS, Band 98, Nr. 20, 16. Mai 1983, Seite 309, Zusammenfassung Nr. 165821e, Columbus, Ohio, US; W.M. SIEGL: "A new insulating gunning mix for continuous casting cold tundishes", & RADEX RUNDSCH. 1982, (4), 954-75

(73) Patentinhaber: Veitscher Magnesitwerke-Actien-Gesellschaft, Schubertring 10-12, A-1010 Wien (AT)

(72) Erfinder: Heindl, Roland, Dipl.-Ing. Dr. mont., Magnesitstrasse 4, A-8700 Leoben (AT)

(74) Vertreter: Kliment, Peter, Dipl.-Ing. Mag.-jur. et al, Singerstrasse 8, A-1010 Wien (AT)

## Beschreibung

Die Erfindung betrifft eine feuerfeste isolierende Spritzmasse für Verteilergefässe von Stranggussanlagen aus basischem feuerfestem Grundmaterial, wie Magnesia, Magnesiachromit, Chromitmagnesia oder Magnesiumsilikatmaterial, mit anorganischem Bindemittel, wie Wasserglas, Magnesiumsulfat oder Phosphaten.

Bei der Stahlherstellung hat in den letzten Jahren das Stranggussverfahren an Bedeutung gewonnen. Bei diesem Verfahren wird Stahl aus einer Pfanne über ein Verteilergefäss (Zwischenbehälter, Verteilerrinne, Tundish) in eine wassergekühlte Kokille gegossen und der Rohblock aus dieser kontinuierlich abgezogen.

Derartige Verteilergefässe werden heute üblicherweise mit einem Dauerfutter aus Schamotte und einem sauren oder basischen Verschleissfutter zugestellt, wobei zur Herstellung des letzteren im wesentlichen drei Methoden angewendet werden: das Schmierverfahren durch Auftragen einer mit Wasser angerührten feuerfesten Masse, das Torkretieren durch Aufspritzen einer feuerfesten Masse unter Wasserzusatz während des Spritzens und die Auskleidung mit vorgefertigten isolierenden Platten.

Bei der Inbetriebnahme einer neu erstellten Auskleidung besteht die Forderung, dass dem ersten in das Verteilergefäss einfliessenden Stahl kaum Wärme entzogen werden darf. Je nachdem, ob es zur Erfüllung dieser Forderung nötig ist, das Verteilergefäss vor der Inbetriebnahme aufzuheizen oder nicht, unterscheidet man sogenannte Warmverteiler und Kaltverteiler. Warmverteiler sind meist mit herkömmlichen nichtisolierenden Massen mittels Schmieren oder Torkretieren zugestellt. Sie müssen vor dem Angiessen auf über 1000°C aufgeheizt werden, um die oben angeführte Forderung zu erfüllen und ausserdem eine vollständige Trocknung der monolithischen Auskleidung zu gewährleisten.

Bei den mit isolierenden Platten ausgekleideten Kaltverteilern besteht der wesentliche Vorteil im Wegfallen dieser Vorwärmung des gesamten Verteilergefässes. Die Auskleidungen mit solchen Platten haben aber die Nachteile hoher spezifischer Feuerfestkosten, was sich insbesondere bei basischen Platten und einer geringen Anzahl von Sequenzgüssen ungünstig auswirkt, eines erhöhten Arbeits- und Zeitaufwandes bei der Zustellung, längerer Umlaufzeiten der Verteiler zufolge längerdauernder Abkühlung mit Luft, der Verringerung des Fassungsvermögens der Verteilergefässe durch das stärkere Plattenfutter und überhöhter Wasserstoffgehalte in der Angussbramme, die durch die organischen Bindemittel in den Platten hervorgerufen werden.

Zur Vermeidung dieser Nachteile der Plattenzustellungen wird in der EP-A 47 728 als Auskleidungsmaterial für Verteilergefässe eine isolierende Spritzmasse empfohlen, die aus 75 bis 95 Gew.% Magnesia, Magnesiachromit, Chromitmagnesia oder Olivin bzw. Forsterit als feuerfestem Grundmaterial, 3 bis 20 Gew.% expandiertem Perlite als die Isolierwirkung hervorrufendem Zusatz, 0,5 bis 5 Gew.% anorganischem Bindemittel, wie Wasserglas, Magnesiumsulfat, Natriumhydrogensulfat oder Phosphaten, und 0,1 bis 5 Gew.% Plastifierungsmittel, wie Ton, Bentonit oder ein Cellulosederivat, aufgebaut ist, wobei 0,5 bis 10 Gew.% des feuerfesten Grundmaterials durch ein Fasermaterial, insbesondere Glas- oder Mineralwolle, ersetzt sein kann. Diese Isoliermasse wird üblicherweise in das nach dem Entleeren des Stahls noch im warmen oder heissen Zustand befindliche Verteilergefäss, d.h. bei einer Temperatur von über 200 oder 300°C oder darüber, unter Wasserzusatz gespritzt. Das Gefäss kann dann nach dem Trocknen der Masse ohne Vorwärmung in Betrieb genommen werden.

Die Isolationswirkung der Verschleissfuttermaterialien wird sowohl durch die Wärmeleitzahl $\lambda$ als auch durch die Temperaturleitzahl $a$ (= thermischer Diffusionskoeffizient) bestimmt. Die pro Zeiteinheit durch die Wand fliessende Wärmemenge $Q$ ist für die ersten Minuten des Füllens des Verteilergefässes proportional dem Verlustfaktor $k = \lambda/\sqrt{a}$. In der folgenden Tabelle sind diese thermischen Daten sowie die Rohdichte $\varrho$ für die angeführten bekannten Verschleissfuttermaterialien zusammengestellt.

| Bekannte Verschleissfutter | | $\gamma_{500}$ [W/mK] | $-6^a$ [10 m²/s] | $\varphi$ [kg/m³] | $k$ [W/m²Ks$^{1/2}$] |
| --- | --- | --- | --- | --- | --- |
| basische Isolierplatten | | 0,5 | 0,35 | 1600 | 845 |
| basische Isoliermasse | - | 0,6 | 0,40 | 1800 | 950 |
| nichtisolierende basische Masse | | 1,2 | 0,55 | 2300 | 1620 |

Wie die Tabelle zeigt, werden mit der bekannten Isoliermasse die Isolationseigenschaften der Plattenauskleidungen nicht ganz erreicht. Der Zusatz von Perlite mit einer typischen Zusammensetzung von 75 Gew.% $SiO_2$, 13 Gew.% $Al_2O_3$, 8 Gew.% Alkalien, Rest $Fe_2O_3$, MgO und CaO, sowie die Anwendung von Wasserglas als Bindemittel und von Ton als Plastifizierungsmittel bedingen eine Herabsetzung der Feuerfestigkeit. Beim Spritzen dieser Isoliermasse in das noch warme oder heisse Verteilergefäss kommt es durch das relativ leichte und feine Perlite oft zu unangenehmer Staubentwicklung. Ausserdem neigt die bekannte Isoliermasse bei Spritzen besonders im oberen Temperaturbereich bei über etwa 250°C zu Aufblähungen und Abplatzungen, da das verdampfende Wasser nur schlecht entweichen kann.

Die Erfindung zielt darauf ab, die Nachteile der bekannten Verschleissfuttermaterialien zu vermeiden. Aufgabe der Erfindung ist es, eine isolierende Spritzmasse zu schaffen, die eine erhöhte, an die Bedürfnisse der Praxis angepasste Feuerfestigkeit aufweist, die ohne erhebliche Staubbelästigung verspritzt werden kann und die ein Verschleissfutter ergibt, das ohne gesonderte Vorwärmung einsetzbar ist, wobei das Entweichen des Spritzwassers auch beim Spritzen auf heisse Wände ohne Aufblähungen und Abplatzungen des Futters möglich sein soll.

Nach der Erfindung gelingt die Lösung dieser Aufgabe dadurch, dass die Spritzmasse aus 46 bis 80 Gew.% Magnesia und 16 bis 50 Gew.% Chromit, Chromitmagnesia, Forsterit oder Serpentin als feuerfestem Grundmaterial sowie 0,5 bis 2 Gew.% anorganischem Bindemittel und 0,5 bis 2 Gew.% eines im Wasser rasch quellenden Polysaccharids, wie Galaktomannane des Typs Carubin oder Guaran, besteht, wobei das feuerfeste Grundmaterial eine Körnungslücke zwischen 0,1 und 0,5 mm aufweist und sein Gehalt an Körnung <0,063 mm zwischen 6 und 14 Gew.% liegt.

Die Isolationswirkung einer Masse kann nach dem Stand der Technik durch poröse oder porenbildende Zusätze, wie Perlite, Vermiculit oder Blähton, durch Ausbrennstoffe, wie Holzmehl oder Stärke, oder durch gasabgebende Substanzen, wie Perborate, Karbonate und organische Säuren, erreicht werden. Nach der Erfindung werden derartige, die Feuerfestigkeit beeinträchtigende oder andere Nachteile ergebende Zusätze vermieden. Die Isolationswirkung wird vielmehr durch die Ausbildung einer deutlich ausgeprägten Körnungslücke zwischen 0,1 und 0,5 mm im feuerfesten Grundmaterial erreicht.

Ein solcher Kornaufbau ist jedoch für die Verspritzbarkeit der Masse äusserst ungünstig. Eine ausreichende Haftung dieser Masse in sich und an der Wand kann mit den bekannten Binde- und Plastifizierungsmitteln, etwa den bei Schmier- und Spritzmassen eingesetzten Methylcellulosen und deren Derivaten, nicht erzielt werden. Als geeignet erweisen sich nach der Erfindung im Wasser rasch quellende Polysaccharide, wie Galaktomannane vom Typ Carubin oder Guaran. Diese Substanzen stellen ein temporäres Bindemittel dar, das sich in der relativ kurzen Zeitspanne zwischen Wasserzudüsung und Auftreffen der Masse an der Wand im Wasser löst. Dadurch wird trotz dem eine ausgeprägte Körnungslücke aufweisenden Kornaufbau die Haftung der Masse in sich und an der Wand gewährleistet.

Zur Erreichung der Isolierwirkung der erfindungsgemässen Masse trägt auch der an sich bekannte Einsatz von feuerfesten Grundmaterialien mit niedriger Wärmeleitfähigkeit, wie Chromit oder Serpentin, in Kombination mit Magnesia bei. Zufolge des Einsatzes feuerfester Grundmaterialien unter Vermeidung von Porenbildnern, welche die Feuerfestigkeit beeinträchtigen, sowie der Verwendung möglichst geringer Mengen von Alkaliträgern, wie Wasserglas, weist die erfindungsgemässe Masse eine erhöhte Feuerfestigkeit auf, die den Erfordernissen der Praxis bei Verteilergefässen, mit Giesszeiten von maximal 15 Stunden und von 5 bis 7 Stunden im Normalfall, angepasst ist. Diese erhöhte Feuerfestigkeit bildet einen wesentlichen Vorteil der erfindungsgemässen Masse gegenüber den für Verschleissfutter bekannten Isoliermassen oder Platten.

Durch den Einsatz des feuerfesten Grundmaterials mit einem relativ geringen Anteil an Körnung unter 0,063 mm wird nicht nur ein isolierendes, poröses und gasdurchlässiges Gefüge erreicht, sondern es wird auch die bei der Verarbeitung bekannter Spritzmassen oft beanstandete Staubentwicklung wesentlich herabgesetzt. Zufolge der Körnungslücke zwischen 0,1 und 0,5 mm wird die Gasdurchlässigkeit der Masse soweit erhöht, dass das beim Spritzen zugeführte Wasser ungehindert austreten kann und dass es auch beim Spritzen auf heisse Wände (über etwa 250°C) zu keinen Aufblähungen und Abplatzungen der aufgespritzten Masse kommt.

Die erfindungsgemässe Masse wird als Auskleidung eines Verteilergefässes am besten in der Weise eingebracht, dass sie unter Wasserzusatz an die Wand des noch in warmem oder heissem Zustand, bei etwa 200 bis 300°C oder darüber, befindlichen Verteilergefässes gespritzt wird. Nach Trocknung der Masse ist das Gefäss ohne eigene Vorwärmung einsatzbereit. In der Regel ist zum Aufheizen des Ausgusses und des Stopfenverschlusses ein Erhitzen auf etwa 500°C erforderlich. Dieses Erhitzen kann zur Trocknung der Masse ausgenützt werden, wenn man das Verteilergefäss dabei mit einem Deckel versieht.

In dem mit der erfindungsgemässen Masse hergestellten Verschleissfutter bilden sich während des Betriebes zunächst drei, gegen Ende der Lebensdauer des Futters zwei unterschiedliche feste Zonen aus. Feuerseitig entsteht nach Abbau der temporären Bindung in der Hitze durch Sinterung der feuerfesten Grundmaterialien eine etwa 2 bis 3 mm starke, fest versinterte Zone. Im dahinterliegenden Bereich in einer Stärke von etwa 10 bis 20 mm brennt das als organisches Bindemittel eingesetzte Polysaccharid ebenfalls aus, wodurch eine mürbe, nur durch die geringen Mengen an anorganischen Bindemitteln zusammengehaltene Zone entsteht. Dahinter liegt die Masse im Anschluss an die Kaltseite, in der Regel an das Dauerfutter, in einer Stärke von etwa 10 bis 20 mm im ursprünglichen, vom Spritzauftragen stammenden festen Zustand vor. Diese letztere Schicht verschwindet im Laufe des Betriebes, da die Zonen, bedingt durch den üblichen Verschleiss, nach aussen, in Richtung zur Kaltseite wandern.

Die Ausbildung der mürben Zone hinter der feuerseitigen festen Sinterzone bietet den Vorteil, dass sich die Masse nach dem Giessen beim Ziehen des Bären leicht löst und aus dem Verteilergefäss entfernen lässt.

Die Zonenausbildung im Verschleissfutter sowie die gute Soforthaftung der Masse beim Spritzen wird durch die quellfähigen Polysaccharide bewirkt. Diese organischen Substanzen geben ihren Wasserstoff bei einer Erwärmung über 250°C praktisch vollständig ab, wodurch eine durch Wasserstoffaufnahme bedingte Beeinträchtigung der Stahlqualität, wie dies bei den Plattenauskleidungen der Fall ist, vermieden wird.

Zum Stand der Technik wird noch auf die AT-PS 301 434 verwiesen, die eine wässerige, flüssige, feuerfeste Masse zur Auskleidung von Ingotformen zeigt. Diese Masse enthält als Suspendiermittel ein Xanthomonas-Kolloid. Dabei handelt es sich um ein Polysaccharid vom Typ Xanthan, welches sich nur langsam, und zwar nur in warmem Wasser, löst. Es ist daher für die Zwecke der Erfindung nicht geeignet, weil hier, wie erwähnt, die Lösung des Bindemittels in Wasser rasch erfolgen muss. Aus der AT-PS 258 775 ist weiter eine feuerfeste Spritzmasse bekannt, die als Plastifiziermittel das Hydroxyäthyl- oder Carboxymethylderivat von Guargummi enthält. Es wird eine hohe Dichte des durch Spritzen aufgetragenen Feuerfestmaterials angestrebt, was durch Einstellung der Körnung auf maximale Packung und Dichte erreicht wird. Im Gegensatz dazu wird nach der Erfindung ein Kornaufbau mit einer Körnungslücke und einem geringen Anteil an Feinstkörnung vorgesehen, der ein poröses, gasdurchlässiges Gefüge ergibt.

In der nachstehenden Tabelle sind drei Beispiele für die erfindungsgemässe Masse angeführt.

| Beispiel | | 1 | 2 | 3 |
|---|---|---|---|---|
| **Rezept:** | | | | |
| Magnesiasinter | 0,5–1,0 mm Gew.-% | 50 | 36 | 80 |
| Magnesiasinter | 0–0,1 mm Gew.-% | – | 14 | – |
| Cromerz | 0,5–1,0 mm Gew.-% | 38 | – | – |
| Chromerz | 0–0,1 mm Gew.-% | 10 | – | 10 |
| Serpentin gebrannt | 0,5–1,0 mm Gew.-% | – | 48 | 8 |
| Galaktomannan vom Typ Guaran | | 1 | 1 | 1 |
| Wasserglas | | 1 | 1 | 1 |
| | | | | |
| **Technologische Werte:** | | | | |
| Rohdichte nach Verarbeitung | [g/cm³] | 2,2 | 1,9 | 1,8 |
| Temperaturleitfähigkeit a | [$10^{-6}$ m²/s] | 0,52 | 0,57 | 0,61 |
| Wärmeleitfähigkeit $\gamma_{500}$ | [W/mK] | 0,4 | 0,4 | 0,7 |
| Verlustfaktor | [W/m²Ks$^{1/2}$] | 555 | 553 | 900 |

## Patentanspruch

Feuerfeste isolierende Spritzmasse für Verteilergefässe von Stranggussanlagen aus basischem feuerfestem Grundmaterial, wie Magnesia, Magnesiachromit, Chromitmagnesia oder Magnesiumsilikatmaterial, mit anorganischem Bindemittel, wie Wasserglas, Magnesiumsulfat oder Phosphaten, dadurch gekennzeichnet, dass sie aus 46 bis 80 Gew.% Magnesia und 16 bis 50 Gew.% Chromit, Chromitmagnesia, Forsterit oder Serpentin als feuerfestem Grundmaterial sowie 0,5 bis 2 Gew.% anorganischem Bindemittel und 0,5 bis 2 Gew.% eines im Wasser rasch quellenden Polysaccharids, wie Galaktomannane des Typs Carubin oder Guaran, besteht, wobei das feuerfeste Grundmaterial eine Körnungslücke zwischen 0,1 und 0,5 mm aufweist und sein Gehalt an Körnung <0,063 mm zwischen 6 und 14 Gew.% liegt.

## Claim

Refractory insulating gunning composition for distributing vessels of continuous casting installations, which comprises a basic refractory material, such as magnesia, magnesia chromite, chromite magnesia, or magnesium silicate material, and an inorganic binder, such as sodium silicate, magnesium sulfate or a phosphate, characterized in that it comprises 46% to 80% by weight magnesia and 16% to 50% by weight chromite, chromite magnesia, forsterite or serpentine as refractory material, 0.5% to 2% by weight of a polysaccharide rapidly swelling in water, such as a galactomannan of the type of carob bean gum or guar gum, wherein the refractory material has a gap in grain sizing between 0.1 mm and 0.5 mm and a content of 6% to 14% by weight of grains of a size less than 0.063 mm.

## Revendication

Pisé réfractaire isolant de gunitage pour récipients distributeurs d'installation de coulée continue en matériau réfractaire basique, tel que la magnésie, la chromite-magnésie, la magnésie-chromite ou un matériau de silicate de magnésium, ayant un liant inorganique, tel que le verre soluble, le sulfate de magnésium ou des phosphates, caractérisé en ce qu'il comprend 46 à 80% en poids de magnésie et 16 à 50% en poids de chromite, magnésie-chromite, forsterite ou serpentine, en tant que matériau réfractaire, ainsi que 0,5 à 2% en poids de liant inorganique et 0,5 à 2% en poids d'un polysaccharide gonflant rapidement dans l'eau, tel qu'un galactomannane de type de la caroubine ou du guar, le matériau réfractaire ayant une lacune granulométrique comprise entre 0,1 et 0,5 mm et une teneur en grain inférieur à 0,063 mm comprise entre 6 et 14% en poids.